# EUROPEAN PATENT SPECIFICATION

(11) **EP 0 382 746 B1**
(45) Date of publication and mention of the grant of the patent: **03.01.1996**
(21) Application number: 88908085.9
(22) Date of filing: 18.08.1988
(51) Int. Cl.: A01G 13/02

(54) **ROOT-GROWTH-INHIBITING SHEET**
MATTE ZUM VERHINDERN DES WACHSTUMS VON WURZELN
FEUILLE EMPECHANT LA CROISSANCE DE RACINES

(30) Priority: 18.08.1987 US 86757
(43) Date of publication of application: 22.08.1990
(73) Proprietor: BATTELLE MEMORIAL INSTITUTE, Columbus Ohio 43201-2693 (US)
(72) Inventor: BURTON, Frederick, G., West Jefferson, OH 43162 (US); CATALDO, Dominic, A., Kennewick, WA 99336 (US); CLINE, John, F., Prosser, WA 99350 (US); SKIENS, W., Eugene, Wilsonville, OR 97070 (US); VAN VORIS, Peter, Richland, WA 99352 (US)
(74) Representative: Evans, David Charles
(86) International application number: US8802853
(87) International publication number: WO8901284

(56) References cited:
- FR-A- 1 597 108
- US-A- 3 384 993
- US-A- 3 891 423
- US-A- 3 939 606
- US-A- 4 350 678

## Description

### Introduction

U.S. Patent applications Serial Number 555,113 filed November 23, 1983 and Serial Numbers 314,809 and 314,810, both filed October 26, 1981 disclose method and articles for the inhibition of root growth, particularly the exclusion of the roots from areas in which they are undesirable, e.g., waste burial sites, underground pipelines, basements, sidewalks, or simply the boundaries between adjacent properties. The articles are formed of polymers, e.g., polyethylene, contain in admixture dinitroanilines, preferably N,N-di-n-propyl-4-trifluoromethyl 2,6-dinitroaniline having the generic name trifluralin. Among the articles which are disclosed are pellets of cylindrical form, about 9 mm in diameter and the same in length. These pellets are preferably distributed about 2.52 to 5.04cms (1 or 2 inches) apart over the area which it is desired to protect. These pellets containing about 25 percent by weight or trifluralin have proven very satisfactory in use and have been shown by tests to have a probable effective life of 50 to over 100 years. Their disadvantage lies in the fact that to distribute them uniformly is a slow, laborious operation.

US-A-4,350,678 provides a tunnel of a polyethylene film to which has been applied a strip or spots of a pesticide composition. The film is not in contact with the ground and is not permeable.

US-A-3,891,423 comprises a material for preventing the entry of roots into unwanted areas comprising a sheet of a water permeable material treated with a 2,6-dinitroaniline. The present invention is characterised in that the sheet of water permeable material carries distributed bodies of a polymer blended with from 2 to 30% of the 2,6-dinitroaniline.

### Summary of the Invention

Thus in accordance with the present invention there is provided a material for preventing the entry of roots into unwanted areas comprising a sheet of water-permeable material and
characterised by the features of the second portion of claim 1.

The sheet material is made porous to permit free passage of water. It may be either a perforated sheet or a woven or nonwoven textile material. A particularly desirable embodiment is a nonwoven fabric of non-biodegradable material. This type of material is known as a "geotextile" and is used for weed control, prevention of erosion on slopes, and other landscaping purposes. In order to obtain a root repelling property, a dinitroaniline is blended with a polymer which is attached to the geotextile or other porous material.

The polymer containing the root repellent dinitroaniline may be distributed in various forms, e.g., as buttons or as, continuous other elongated beads. The choice of the specific mode of distribution depends to a large part on the life desired for the root repellency.

The effectiveness of the porous sheet barrier in inhibiting root elongation is controlled by the soil concentration of dinitroaniline adjacent to the barrier. This is regulated by the release rate of the dinitroaniline from the buttons, or beads. For buttons, spacing is generally on 2.52 to 5.04cms (1-to 2-inch) centres. Elongated beads are arranged in regular patterns or spacing to produce a protective soil area. The dinitroaniline will slowly diffuse from the polymer with which it is mixed at a controlled rate, be absorbed to the soil adjacent to the barrier, and thus prevent further elongation or penetration of the roots.

### Brief Description of the Drawings

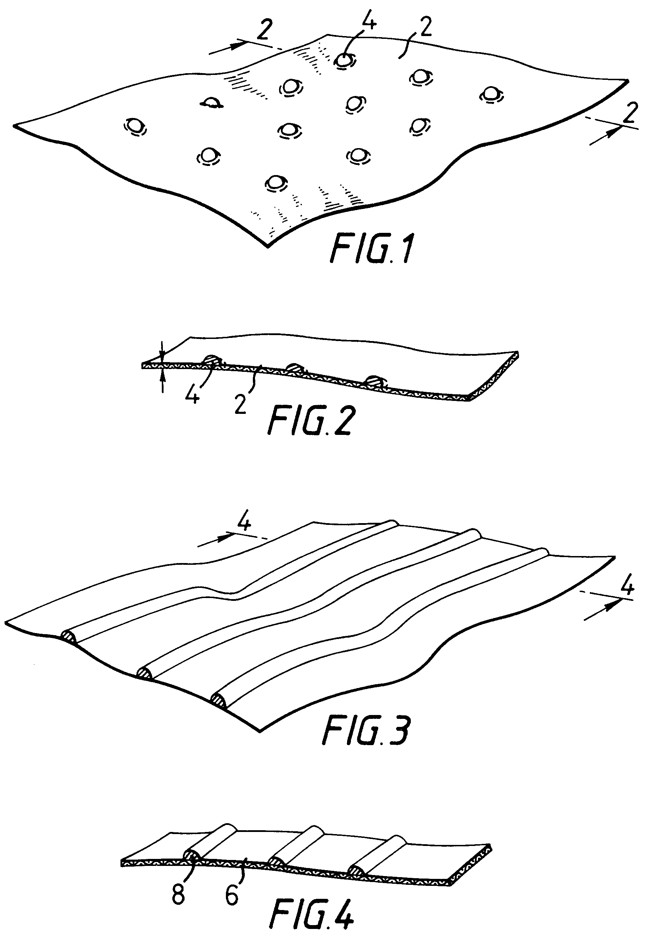

In the drawings Figure 1 is a perspective view of the embodiment employing small buttons of polymer Figure 2 is a cross section on the line 2-2 of Figure 1. Figure 3 is a plan view of the type employing continuous beads. Figure 4 is a section on the line 4-4 of Figure 3.

### Detailed Description

In Figure 1 we have shown a sheet of nonwoven fabric formed of felted fibers of polyethylene or other thermoplastic material. Attached to it are buttons of polymer in which is mixed from 2 to 30% dinitroaniline, preferably trifluralin. Carbon black is usually added to improve retention of the dinitroaniline. The buttons may be made from a polymer selected from the following list:
Polyethylenes (low density, linear low density, high density)
Polypropylene
Copolymers and blends of above polymers
Ethylene vinylacetate/ethylene acrylic acid/ethylene ethyl acrylate
Polybutylene
Acrylate-styrene-acrylonitrile
Epoxides
Polyamides
Polyesters (aromatic)
Polyurethanes
Silicones
Thermoplastics elastomers which may be prepared from a number of monomers such as styrene block copolymers with butadiene or isoprene, polyether-esters or olefinics.

The buttons, 4, are attached to the sheet, 2 by e.g., adhesives or mechanical fasteners. A particularly desirable mode is by extrusion of a molten plastic mixed with the dinitroaniline onto or through the fabric and allowing it to cool in place. Desirably the buttons have an average diameter of 6.3 to 9.45mm (1/4 to 3/8 inch) and an average thickness of 3.15 to 9.45mm (1/8 to 3/8 inch) and spaced on 2.52 to 7.56cms (1 to 3 inch) centers, preferably not more than 5.04cms (2 inches). As stated above, they should contain from 2 to 30 percent dinitroaniline. Based on experimental results, buttons of the 9.45mm (3/8-inch) diameter and 9.45mm (3/8-inch) thickness containing 25 percent trifluralin and 25 percent carbon black will have an effective root repelling lifetime of at least 50 years and probably 100 years. Buttons of other sizes made of different polymers and/or containing different dinitroanilines will have different lives which may be varied according to the intended use. As may be expected, the use of smaller buttons and the use of smaller proportions of dinitroaniline will result in shorter lives, as will the use of dinitroanilines which diffuse more rapidly than trifluralin.

While we have shown the buttons arranged in right angled rows, other distributions, e.g., in a diamond pattern, may be preferred in some cases.

In Figures 3 and 4 we show the use of elongated beads, 8, attached to the fabric 6. These beads may be formed of the same materials and attached in the same manner as the buttons, 4, of Figures 1 and 2. They may have widths and thicknesses in the range of 1.58 to 6.3mm (1/16 to 1/4 inch) and should not leave gaps of more than 5.04cms (2 inches). Because they have a stiffening effect on the fabric, this embodiment is somewhat less flexible in use than the one having buttons shown in Figures 1 and 2. The beads need not be parallel, but may be arranged in other patterns.

## Claims

1. An article adapted to be buried in soil for inhibiting root elongation in juxtaposition therewith; said article comprising a sheet of water-permeable material (2,6) and being characterised in that said sheet (2,6) carries a plurality of spaced bodies (4,8) formed from a polymer blended with 2-30% of a 2,6-dinitroaniline; wherein in use the 2,6-dinitroaniline is released slowly from the bodies (4,8) into the soil; the rate of release of 2,6-dinitroaniline being controlled substantially by the rate of diffusion of 2,6-dinitroaniline through the polymer.

2. An article as claimed in Claim 1 wherein said 2,6-dinatroaniline is trifluralin.

3. An article as claimed in Claim 1 or Claim 2 wherein said sheet is flexible.

4. An article as claimed in any preceding claim wherein said sheet is formed of a non-biodegradable composition.

5. An article as claimed in any preceding claim wherein said sheet is a nonwoven fabric of a non-biodegradable polymeric composition.

6. An article as claimed in any preceding claim wherein said polymer is blended with an amount of, carbon black sufficient to improve retention of said 2,6-dinitroaniline.

7. An article as claimed in Claim 6 wherein the concentration of carbon black in each body is about 25%.

8. An article as claimed in any preceding claim wherein said polymer is polyethylene

9. An article as claimed in any preceding claim wherein said bodies are in the form of buttons (4) attached to, and distributed over, said sheet.

10. An article as claimed in Claim 9, wherein said buttons (4) are 6.3 to 9.45mm (1/4 to 3/8 inch) in diameter and 3.15 to 9.45mm (1/8 to 3/8 inch) maximum thickness.

11. An article as claimed in Claim 9 or 10 wherein said buttons (4) are spaced apart an average of 2.52 to 7.56 cm (1 to 3 inches).

12. An article as claimed in any one of Claims 1 to 8 wherein said bodies are in the form of elongated beads (8).

13. An article as claimed in Claim 12 wherein said elongated beads (8) are 0.158 to 0.63 cm (1/16 to 1/4 inch) wide and from 1.57 to 6.3mm (1/16 to 1/4 inch) in maximum thickness.

## Patentansprüche

1. Zum Vergraben im Erdboden geeigneter Gegenstand aus einer aus einem wasserdurchlässigen Material (2,6) bestehenden Matte zur Verhinderung von Wurzelwachstum in seiner unmittelbaren Umgebung, dadurch gekennzeichnet, daß auf der Matte (2,6) mehrere voneinander beabstandete, aus einem mit 2-30% 2,6-Dinitroanilin vermischten Polymer gebildeten Körpern (4,8) angeordnet sind, wobei bei der Anwendung das 2,6-Dinitroanilin langsam aus den Körpern (4,8) in den Erdboden abgegeben wird, wobei die Geschwindigkeit der Abgabe des 2,6-Dinitroanilins weitgehend durch die Diffusionsgeschwindigkeit des 2,6-Dinitroanilins durch das Polymer bestimmt wird.

2. Gegenstand nach Anspruch 1, bei dem das 2,6-Dinitroanilin Trifluralin ist.

3. Gegenstand nach Anspruch 1 oder Anspruch 2, bei dem die Matte flexibel ist.

4. Gegenstand nach einem der vorhergehenden Ansprüche, bei dem die Matte aus einer biologisch nicht abbaubaren Zusammensetzung gebildet ist.

5. Gegenstand nach einem der vorhergehenden Ansprüche, bei dem die Matte ein Vliesstoff aus einer biologisch nicht abbaubaren, polymeren Zusammensetzung ist.

6. Gegenstand nach einem der vorhergehenden Ansprüche, bei dem das Polymer zusätzlich mit einer zur Verbesserung der Speicherung des 2,6-Dinitroanilins ausreichenden Menge an Ruß vermischt ist.

7. Gegenstand nach Anspruch 6, bei dem die Rußkonzentration eines jeden Körpers etwa 25% beträgt.

8. Gegenstand nach einem der vorhergehenden Ansprüche, bei dem das Polymer Polyethylen ist.

9. Gegenstand nach einem der vorhergehenden Ansprüche, bei dem die Körper in Form von Knöpfen (4) an der Matte befestigt und darauf verteilt sind.

10. Gegenstand nach Anspruch 9, bei dem die Knöpfe (4) einen Durchmesser von 6,3 bis 9,45 mm (1/4 bis 3/8 Zoll) und eine Maximaldicke von 3,15 bis 9,45 mm (1/8 bis 3/8 Zoll) aufweisen.

11. Gegenstand nach Anspruch 9 oder 10, bei dem die Knöpfe (4) in mittleren Abständen von 2,52 bis 7,56 cm (1 bis 3 Zoll) angeordnet sind.

12. Gegenstand nach einem der Ansprüche 1 bis 8, bei dem die Körper in Form von länglichen Strängen (8) vorliegen.

13. Gegenstand nach Anspruch 12, bei dem die länglichen Stränge (8) eine Breite von 0,158 bis 0,63 cm (1/16 bis 1/4 Zoll) und eine Maximaldicke von 1,57 bis 6,3 mm (1/16 bis 1/4 Zoll) aufweisen.

## Revendications

1. Article conçu pour être enterré dans le sol pour inhiber l'allongement des racines en juxtaposition avec celles-ci; ledit article comprenant une feuille de matière perméable à l'eau (2, 6) et étant caractérisé en ce que ladite feuille (2, 6) porte plusieurs corps espacés (4, 8) formés d'un polymère mélangé avec 2-30% d'une 2,6-dinitroaniline; dans lequel, en cours d'utilisation, la 2,6-dinitroaniline est lentement libérée des corps (4, 8) dans le sol; la vitesse de libération de la 2,6-dinitroaniline étant essentiellement régulée par la vitesse de diffusion de la 2,6-dinitroaniline à travers le polymère.

2. Article selon la revendication 1, dans lequel ladite 2,6-dinitroaniline est la trifluraline.

3. Article selon la revendication 1 ou la revendication 2, dans lequel ladite feuille est flexible.

4. Article selon l'une quelconque des revendications précédentes, dans lequel ladite feuille est formée d'une composition non biodégradable.

5. Article selon l'une quelconque des revendications précédentes, dans lequel ladite feuille est un tissu non tissé d'une composition polymère non biodégradable.

6. Article selon l'une quelconque des revendications précédentes, dans lequel ledit polymère est mélangé avec une quantité de noir de carbone suffisante pour améliorer la rétention de ladite 2,6-dinitroaniline.

7. Article selon la revendication 6, dans lequel la concentration du noir de carbone dans chaque corps est d'environ 25%.

8. Article selon l'une quelconque des revendications précédentes, dans lequel ledit polymère est le polyéthylène.

9. Article selon l'une quelconque des revendications précédentes, dans lequel lesdits corps ont la forme de boutons (4) fixés et répartis sur ladite feuille.

10. Article selon la revendication 9, dans lequel lesdits boutons (4) ont un diamètre de 6,3 à 9,45 mm (1/4 à 3/8 pouce) et une épaisseur maximale de 3,15 à 9,45 mm (1/8 à 3/8 pouce).

11. Article selon la revendication 9 ou 10, dans lequel lesdits boutons (4) sont distants en moyenne de 2,52 à 7,56 cm (1 à 3 pouces).

12. Article selon l'une quelconque des revendications 1 à 8, dans lequel lesdits corps ont la forme de bourrelets allongés (8).

13. Article selon la revendication 12, dans lequel lesdits bourrelets allongés (8) ont une largeur de 0,158 à 0,63 cm (1/16 à 1/4 pouce) et une épaisseur maximale de 1,57 à 6,3 mm (1/16 à 1/4 pouce).
